# NOUVEAU FASCICULE DE BREVET EUROPEEN

(11) **EP 0 265 323 B2**
(45) Date de publication et mention de la décision concernant l'opposition: **07.11.2001**
(45) Mention de la délivrance du brevet: 15.04.1992
(21) Numéro de dépôt: 87402263.5
(22) Date de dépôt: 09.10.1987
(51) Int. Cl.: B44F 1/12, C09K 11/06, D21H 21/40, G06K 19/08, C09D 11/00

(54) **Objet fiduciaire de sécurité permettant une authentification visuelle ou optique**
Treuhänderischer Sicherheitsgegenstand, der eine visuelle oder optische Echtheitsprüfung erlaubt
Fiduciary security object permitting a visual or optical authentification

(30) Priorité: 10.10.1986 FR 8614161
(43) Date de publication de la demande: 27.04.1988
(73) Titulaire: BANQUE DE FRANCE, F-75049 Paris Cedex 01 (FR)
(72) Inventeur: Gravisse, Philippe, F-75015 Paris (FR); Duchateau, Jacques, F-59245 Recquinies (FR); Perron, Maurice, F-78200 Viroflay (FR)
(74) Mandataire: Fruchard, Guy

(56) Documents cités:
- EP-A- 0 053 124
- DE-A- 2 754 369
- DE-C- 667 012
- FR-A- 2 329 736
- FR-A- 2 367 810
- GB-A- 1 286 622
- GB-A- 1 422 526
- GB-A- 2 016 370
- US-A- 4 387 112
- Luminescence of inorganic solids. par Baldassare Di Bartolo. Plenum Press, New York 1978, page 170

## Description

La présente invention concerne des objets fiduciaires ou de sécurité présentant des caractéristiques optiques permettant leur authentification et rendant difficile leur imitation.

De nombreux objets présentent une valeur juridique ou économique de grande importance et leur reproduction par des faussaires entraîne des conséquences graves pour l'autorité émettrice ou la Communauté. On peut ainsi citer des documents juridiques - documents officiels, contrats, certificats, titres divers, - des documents économiques - valeurs, billets de banque, cartes de crédit, disquettes de programme d'ordinateur, - et de façon générale tout objet dont l'authentification est importante.

On a proposé dans l'état de la technique de marquer un objet fiduciaire avec un matériau incluant au moins deux composés phosphorescents provoquant un changement de coloration évoluant dans le temps, après exposition à un rayonnement ultra-violet. La technique décrite dans le brevet GB 2016370 met en oeuvre des composés phosphorescents choisis parmi les composés dont les durées de rémanence sont différentes et dont les longueurs d'onde de réémission sont différentes. Cependant, cette technique n'offre pas une sécurité suffisante.

La présente invention a pour but de remédier à cet inconvénient en réalisant un objet fiduciaire ou de sécurité présentant des caractéristiques optiques permettant son identification et rendant difficile sa reproduction, caractérisé en ce qu'il comporte sur au moins l'une de ses parties une matrice organique dans laquelle sont incorporées :
- une ou plusieurs matières scintillantes, et
- une ou plusieurs matières photoluminescentes à rémanence de longue durée,
ces matières formant une cascade lumineuse de sorte que : elles absorbent le rayonnement solaire pour réémettre un mélange de rayonnements à longueurs d'ondes prédéterminées, ce mélange formant une première couleur ; elles absorbent un rayonnement ultra violet pour réémettre un mélange de rayonnements à longueur d'onde prédéterminées, ce mélange formant une seconde couleur ; et elles émettent après exposition à ce rayonnement ultraviolet un mélange de rayonnements à longueurs d'ondes prédéterminées, ce mélange formant une troisième couleur visible dans l'obscurité.

On réalise ainsi un système optiquement actif qui, soumis à une lumière incidente de longueur d'onde λ1, renvoie une lumière emergente de longueur d'onde λ2, en général supérieure à λ1, le décalage entre les longueurs d'onde λ1 et λ2 étant augmenté par l'utilisation de matériaux optiquement actifs se relayant entre eux, c'est-à-dire des matériaux dont certains ont des longueurs d'onde d'émission correspondant à la longueur d'onde d'absorption d'autres matériaux entrant dans le système.

Ce système optiquement actif sera désigné dans la présente demande par l'expression : "Cascade lumineuse". L'utilisation de matériaux formant entre eux une cascade lumineuse et réduisant des phénomènes optiques non linéaires, rend impossible, en l'état actuel de la science, l'identification des composés mis en oeuvre par analyse du rayonnement d'excitation et de la réponse spectrophotométrique globale.

Les objets marqués salon l'invention présentent une première couleur à la lumière du jour, une deuxième couleur différente de la première, lorsqu'ils sont soumis à une source d'ultra-violets, et une troisième couleur lorsqu'on replace ledit objet dans l'obscurité.

La matrice organique dans laquelle sont incorporées les matières formant cascade lumineuse est constituée par un liant de synthèse dont la bande spectrale va de l'ultra-violet au proche infra-rouge. Elle pourra être réalisée en une résine synthétique du type résine acrylique, vinylique, silicone, polyméthylméthacrylate (PMMA), polyéthylène ou polyamide

La matrice constitue selon un mode préféré de l'invention une encre d'imprimerie qui peut être déposée sur le document à authentifier par tous moyens connus, notamment par impression classique, à l'aide d'un tampon ou d'un stylographe.

Selon un autre mode de réalisation, la matrice constitue un film de faible épaisseur, de l'ordre de 5 à 20 µm, qui est appliqué sur une partie au moins de l'objet à authentifier par transfert, enduction, ou tout autre procédé connu d'impression.

Selon un autre mode de réalisation de l'invention, la matrice constitue une feuille semi-rigide du type carte de crédit.

Selon un mode de réalisation de la présente invention, la matrice incorporant les matières formant cascade lumineuse constitue des particules de petite dimension. Ces particules sont destinées à être incorporées dans le matériau constituant l'objet fiduciaire.

Ces particules peuvent prendre la forme de grains, de pastilles ou de fibres.

La dimension des particules est de l'ordre d'une dizaine de micromètres pour la section des grains ou de pastilles, et de l'ordre de quelques millimètres pour la longueur des fibres ou le diamètre des pastilles. Ces particules sont incluses dans le matériau constituant l'objet fiduciaire au moment de la préparation dudit matériau.

Dans le cas d'un objet fiduciaire du type billet de banque, titre, papier fiduciaire, les particules sont introduites dans la pâte à papier au moment de la préparation du papier. Dans le cadre de la présente invention, ces matières photoluminescentes scintillantes sont préférentiellement des composés cycliques aromatiques et les matières photoluminescentes à rémanence de longue durée sont préférentiellement des cristaux dopés photoluminescents, notamment des sulfures ou des tungstates dopés par des métaux lourds tels que Cu, Co, Mn, Ag, Bi, Eu, Tb, etc...

A titre indicatif, de bons résultats sont obtenus en utilisant les matières suivantes :
- diphényloxazol (PPO),
- cristaux de sulfure de calcium et de strontium dopés au bismuth,
- cristaux de sulfure de zinc et de cadmium dopés au cuivre,
- cristaux de sulfure de zinc dopés au cuivre,
- cristaux d'oxysulfure d'yttrium dopés à l'europium (Y2, 02, S, Eu),
- dérivés du type xantène, acridine, chinoline, thiazole, indamine, quinone cétone, et de préférence des dérivés de type indanthrène.

Bien entendu, de nombreux autres cristaux photoluminescents et/ou composés cycliques aromatiques photoluminescents peuvent être employés.

La vérification de l'authentification d'un objet marqué selon l'invention se fait par étude de la couleur diurne, de la couleur réémise lorsque le document est observé dans l'obscurité, après avoir été exposé à un rayonnement visible ou ultra-violet par exemple à la lumière du jour.

Cette vérification peut s'effectuer par observation visuelle, ou de façon automatique à l'aide d'un dispositif soumettant le document à vérifier successivement à un rayonnement dans le spectre visible, à un rayonnement ultra-violet, et à l'obscurité, et analysant la réponse chromatique de l'objet à l'aide de capteurs électroniques.

Selon une variante de la présente invention, les matières photoluminescentes ou la matrice sont recouvertes d'une substance transparente aux rayonnements de longueur d'onde comprise entre l'infra-rouge et l'ultra-violet, à l'exception d'au moins une étroite bande spectrale déterminée.

Cette bande de non transparence sera choisie de façon à être incluse dans une bande d'absorption de l'une des matières formant cascade lumineuse.

Selon un exemple préféré de réalisation, cette bande de non transparence est centrée sur une longueur d'onde de 255 nanomètres ou 366 nanomètres, correspondant aux longueurs d'onde des lampes d'illumination dans la plage des ultra-violets habituellement utilisés pour la vérification des documents fiduciaires.

On obtient ainsi un comportement différent en cas d'illumination avec l'un ou l'autre type de lampe ultra-violet.

Bien entendu, cette bande de non transparence peut être centrée sur des longueurs d'onde correspondant tant au spectre visible qu'à la plage des ultra-violets.

La substance sera constituée d'une résine organique de type connu, par exemple une résine organique à base de nickel.

On pourra utiliser une substance de type 2, 5, 2^{IV}, 5^{IV} tetraméthyl-p-quinquephényl présentant une transparence dans le spectre visible et ultra-violet, à l'exception d'une bande d'absorption comprise entre 240 nanomètres et 320 nanomètres, ou une substance de type 4, 6 diméthyl 7 éthylaminocoumarin transparent dans le spectre visible et ultra-violet, à l'exception d'une bande comprise entre 340 nanomètres et 400 nanomètres, ou encore des substances de type 3, 5, 3^{IV}, 5^{IV} tétra-t-butyl-p-quinquephényl dont la bande d'absorption est comprise entre 280 nanomètres et 340 nanomètres.

Ladite substance sera déposée sur les matiè-rescristallines ou la matrice sous forme de particules (grains, pastilles, fibres) ou de film par enduction ou par trempage dans un bain de substance organique.

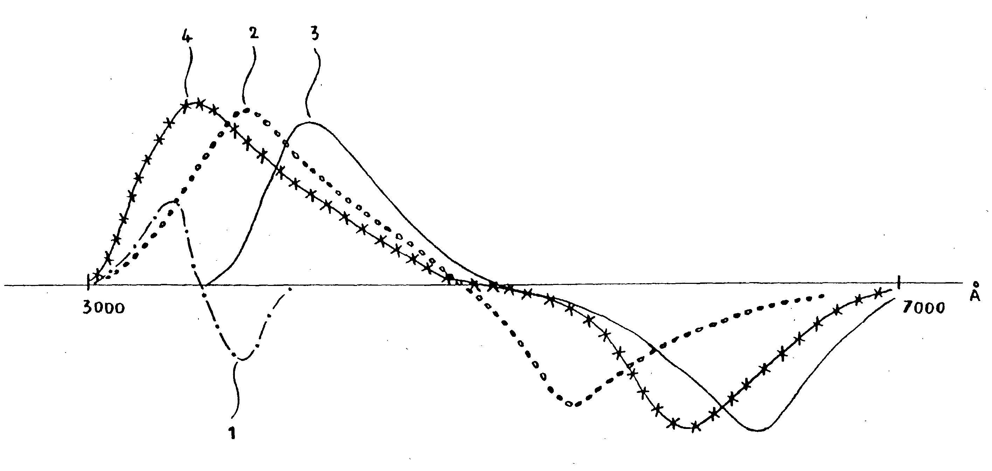

D'autres caractéristiques et avantages resortiront mieux de la description qui va suivre, en s appuyant sur la figure unique représentant la courbe d'absorption et de réémission d'un exemple de réalisation de l'invention.

Sur la figure unique, les longueurs d'onde sont portées en abscisses en angstroems et le coéfficient d'absorption et de réémission en ordonnées respectivement positives et négatives.

La courbe (1) correspond à une matière photo-lumin escente du type PPO. On constate que la bande de réémission correspond aux bandes d'absorption de deux autres matières du type cristaux de sulfure de zinc dopés au cuivre (courbe (2)) et indanthrène(courbe (3)) pour l'exemple représenté sur cette figure, et provoque un phénomène de "cascade lumineuse". Le rôle du PPO ou de tout autre matière présentant une bande d'absorption dans l'ultra-violet et une bande de réémission correspondant sensiblement à la bande d'absorption d'au moins l'une des autres matières photoluminescentes est de favoriser le fonctionnement des autres matières photoluminescentes par un effet de "cascade lumineuse".

La courbe (4) correspond à une matière photoluminescente à rémanence de longue durée du type cristaux de sulfure de calcium et de strontium dopés au bismuth dans l'exemple représenté sur la figure unique.

Le comportement de l'objet fiduciaire sera le suivant : lorsque le document est soumis à la lumière du jour, il apparaît avec une première teinte correspondant à la couleur naturelle des matières; lorsque le document est soumis à un rayonnement ultra-violet, il apparaît avec une teinte correspondant à la ou aux bandes de réémission des dopants ou des cascades lumineuses ; lorsque le document est replacé dans l'obscurité, il présente une troisième teinte provenant de la rémanence de longue durée.

Dans la description qui va suivre, on présentera à titre indicatif quatre exemples de réalisations qui ne sauront en aucune façon restreindre ou limiter la portée de la présente invention.

### Exemple 1 :

Cet exemple concerne la préparation d'un kilogramme de produit fini. Une composition typique est obtenue comme suit : on dissout à température modérée, selon des techniques connues, 5 grammes de matière fluorescente du type indanthrène, 300 grammes de cristaux de sulfure de zinc dopés au cuivre, ainsi que 0,1 gramme de PPO dans 400 grammes de résine vinylique ou acrylique. Le document marqué avec la composition selon cet exemple présentera une couleur rose à la lumière du jour, une couleur verte lorsqu'il sera soumis à un rayonnement ultra-violet et une rémanence de longue durée bleue dans l'obscurité.

### Exemple 2 :

Pour la préparation d'un kilogramme de produit fini, une composition typique est obtenue comme suit : on dissout 5 grammes de matière fluorescente du type indanthrène, 300 grammes de cristaux de sulfure de zinc et de cadmium dopés au cuivre, 300 grammes de cristaux d'oxysulfure d'yttrium dopés à l'europium et 0,1 gramme de PPO dans 400 grammes de résine acrylique ou vinylique. Le document marqué selon cet exemple présentera une teinte verdâtre à la lumière du jour, une teinte rouge lorsque le document est exposé à un rayonnement ultra-violet, et une teinte orangée dans l'obscurité par rémanence de longue durée.

### Exemple 3 :

Pour la préparation d'un kilogramme de produit fini, une composition est obtenue comme suit : on dissout 5 grammes de matière fluorescente du type indanthrène, 300 grammes de cristaux d'oxysulfure d'yttrium dopés à l'europium, 300 grammes de cristaux de sulfure de zinc dopés au cuivre et 0,1 gramme de PPO dans 400 grammes de résine acrylique ou vinylique. Le document marqué avec la composition selon cet exemple présentera une couleur bleu pâle à la lumière du jour, rouge orangé à l'exposition à un rayonnement ultra-violet, et vert pâle dans l'obscurité.

### Exemple 4 :

Pour la préparation d'un kilogramme de produit fini, une composition typique est obtenue comme suit : on dissout 300 grammes de cristaux d'oxysulfure d'yttrium dopés à l'europium, 300 grammes de cristaux de sulfure de zinc dopés au cuivre de longue rémanence, et 0,1 gramme de PPO dans 400 grammes de résine de polyméthylacrylate. Le produit ainsi obtenu sera élaboré sous forme de grains de section moyenne de 8 micromètres. Ces grains sont incorporés dans la pâle à papier. La feuille de papier ainsi obtenue sera, en outre, recouverte par enduction d'une résine contenant une substance du type 2, 5, 2^{IV}, 5^{IV} tétraméthyl-p-quinquephényl formant un masque anti-ultra-violet pour la bande de longueur d'onde incluant la longueur d'onde de 255 nanomètres, utilisée habituellement pour les tests de réponse aux ultra-violets. Le document marqué avec une composition selon cet exemple présentera une teinte blanc verdâtre à la lumière du jour, rouge orangé lors de l'exposition à un rayonnement ultra-violet et verte dans l'obscurité. Toutefois la réponse rouge orangé ne sera pas obtenue si le document marqué selon cet exemple est examiné à l'aide d'une source ultra-violette émettant principalement dans les longueurs d'onde proches de 255 nanomètres.

## Revendications

1. Objet fiduciaire ou de sécurité présentant des caractéristiques optiques permettant son identification et rendant difficile sa reproduction, **caractérisé en ce qu'**il comporte sur au moins l'une de ses parties une matrice organique dans laquelle sont incorporées :
- une ou plusieurs matières scintillantes, et
- une ou plusieurs matières photoluminescentes à rémanence de longue durée,
ces matières formant une cascade lumineuse de sorte que :
elles absorbent le rayonnement solaire pour réémettre un mélange de rayonnements à longueurs d'ondes prédéterminées, ce mélange formant une première couleur ; elles absorbent un rayonnement ultra violet pour réémettre un mélange de rayonnements à longueur d'onde prédéterminées, ce mélange formant une seconde couleur ; et elles émettent après exposition à ce rayonnement ultraviolet un mélange de rayonnements à longueurs d'ondes prédéterminées, ce mélange formant une troisième couleur visible dans l'obscurité.

2. Objet selon la revendication 1, **caractérisé en ce que** lesdites matières sont des matières cycliques aromatiques conjuguées et/ou des cristaux photoluminescents.

3. Objet selon l'une quelconque des revendications 1 à 2, **caractérisé en ce que** ladite matrice est réalisée en une résine organique telle qu'une résine du type polyamide ou polyéthylène ou acrylique ou vinylique.

4. Objet selon l'une quelconque des revendications 1 à 3, **caractérisé en ce que** ladite matrice organique est recouverte d'une substance transparente dans la plage spectrale allant de l'ultra-violet à l'infrarouge, à l'exception d'au moins une bande de longueur d'onde déterminée.

5. Objet selon la revendication 4, **caractérisé en ce que** ladite substance est transparente dans la plage spectrale allant de l'ultra-violet à l'infrarouge, à l'exception d'une bande de longueur d'onde incluant la longueur d'onde de 255 nanomètres.

6. Objet selon la revendication 4, **caractérisé en ce que** ladite substance est transparente dans la plage spectrale allant de l'ultra-violet à l'infrarouge à l'exception d'une bande de longueur d'onde incluant la longueur d'onde de 366 nanomètres.

7. Objet selon l'une quelconque des revendications 1 à 3, caractérisé ce que ladite matrice organique comporte les trois matières suivantes
- 1ère matière : substance fluorescente éventuellement colorée à la lumière naturelle ;
- 2ème matière : cristaux de sulfure de calcium et de strontium dopés au bismuth (matière photoluminescente à rémanence de longue durée) ;
- 3ème matière : cristaux de sulfure de zinc dopés au cuivre (matière photoluminescente à rémanence de longue durée.

8. Objet selon l'une quelconque des revendications 1 à 3, **caractérisé en ce que** ladite matrice organique comporte les trois matières suivantes :
- 1ère matière : substance fluorescente éventuellement colorée à la lumière naturelle
- 2ème matière : cristaux de sulfure de zinc et de cadmium dopés au cuivre, (matière photoluminescente à rémanence de longue durée) ;
- 3ème matière : cristaux d'oxysulfure d'yttrium dopés à l'europium, (matière photoluminescente à rémanence de longue durée).

9. Objet selon l'une quelconque des revendications 7 ou 8, **caractérisé en ce que** l'ensemble constitué par la matrice organique et lesdites matières a la composition pondérale suivante :
- 1ère matière : 0,5%
- 2ème matière : 30,0%
- 3ème matière : 30,0%
- matrice organique dopée à 0,04% en poids de diphényloxazol : 39,5%.

10. Objet selon l'une quelconque des revendications 7 à 9, **caractérisé en ce qu'**il comporte une matière de dopage du type PPO, en une teneur d'environ 0,1 g/kg du produit fini, et qui est destiné à favoriser le fonctionnement des autres matières.

11. Objet selon l'une quelconque des revendications 1 à 10, **caractérisé en ce que** ladite matrice se présente sous la forme d'un film d'une épaisseur de l'ordre de 5 ou 20 µm destiné à être appliqué sur au moins une partie de l'objet.

12. Objet selon la revendication 11, **caractérisé en ce que** ledit film est appliqué sur une partie au moins de l'objet par transfert.

13. Objet selon l'une quelconque des revendications 1 à 10, **caractérisé en ce que** ladite matrice se présente sous la forme d'un vernis ou d'une encre d'imprimerie.

14. Objet selon la revendication 13, **caractérisé en ce que** ledit vernis est appliqué sur une partie au moins de l'objet par impression ou par enduction.

15. Objet selon l'une quelconque des revendications 1 à 10, **caractérisé en ce que** ladite matrice se présente sous la forme de particules destinées à être incorporées dans le constituant de l'objet.

16. Objet selon la revendication 15, **caractérisé en ce que** lesdites particules sont incorporées dans le papier.

## Patentansprüche

1. Treuhändischer oder sicherheitsgegenstand, der eine visuelle oder optische Echtheitsprüfung erlaubt und seine Nachbildung erschwert, wobei dieser mindestens auf einer seiner seiten eine organische Matrix enthält; in dieser sind eingebaut :
- eine oder mehrere szintillierende Substanzen,
- eine oder mehrere photolumineszierende Substanzen mit Langzeil-Remanenz;
diese Substanzen ermöglichen einer Lichtkaskade so daß sie die Sonnenstrahlung absorbieren und eine Strahlungsmischung mit vorbestimmten Wellenlängen wiederausstrahlen, die eine erste Farbe erzeugt ; die eine ultraviolettstrahlung absorbieren und eine Strahlungsmischung mit vorbestimmten Wellenlängen wiederausstrahlen die eine zweite Farbe erzeugt; und die nach erfolgter Ultraviolettbestrahlung eine Strahlungsmischung mit vorbestimmten Wellenlängen aus strahlen die eine in der Dunkelheit sichtbare dritte Farbe erzeugt.

2. Treuhändisher sicherheitsgegenstand nach Patentanspruch 1, wobei die genannten Substanzen zyklische Aromaten mit konjugierten Doppelbindungen und/oder photolumineszierende Kristalle sind.

3. Treuhändisher Sicherheitsgegenstand nach Patentanspruch 1 oder 2, wobei die genannten Matrix aus organischem Harz wie zum Beispiel Polyamid-Polyäthylen-, Acryl- oder vinylharz besteht.

4. Treuhändisher sicherheitsgegenstand nach einem der Patentanspruche 1 bis 3, wobei die genannten organische Matrix mit einer vom UV- bis zum Infrarot-Spektralbereich durchlässigen Substanz Überzogen ist, mit Ausnahme mindestens eines bestimmten Wellenlängenbandes.

5. Treuhändisher Sicherheitsgegenstand nach Patentanspruch 4, wobei die genannten Substanz vom uv- bis zum Infrarot-spektralbereich durchlässig ist, mit Ausnahme eines Wellenlängenbandes einschließlich der Wellenlänge 255 nm.

6. Treuhändischer Sicherheitsgegenstand nach Patentanspruch 4, wobei die genannte Substanz vom UV- bis zum Infrarot-Spektralbereich durchlässig ist, mit Ausnahme eines Wellenlängenbandes einschließlich der Wellenlänge 366 nm.

7. Treuhändischer Sicherheitsgegenstand nach einem der Patentansprüche 1 bis 3, wobei die genannte organische Matrix die drei folgenden Substanzen enthält:
- 1. Substanz: Fluoreszierende Substanz,die sich bei Tageslicht gegebenenfalls färbt;
- 2. Substanz: Mit Wismut dotierte Kalzium- und Strontiumsulfidkristalle (photolumineszierende Substanz mit Langzeit-Remanenz);
- 3. Substanz: Mit Kupfer dotierte Zinksulfidkristalle (photolumineszierende Substanz mit Langzeit-Remanenz).

8. Treuhändischer Sicherheitsgegenstand nach einem der Patentansprüche 1 bis 3, wobei die genannte organische Matrix die drei folgenden Substanzen enthält:
- 1. Substanz: Fluoreszierende Substanz, die sich bei Tageslicht gegebenenfalls färbt;
- 2. Substanz: Mit Kupfer dotierte Zink- und Kadmiumsulfidkristalle (photolumineszierende Substanz mit Langzeit-Remanenz);
- 3. Substanz: Mit Europium dotierte Yttriumoxysulfidkristalle (photolumineszierende Substanz mit Langzeit-Remanenz).

9. Treuhändischer Sicherheitsgegenstand nach Patentanspruch 7 oder 8. wobei die organische Matrix und die genannten Substanzen zusammen folgende Gewichts-Zusammensetzung aufweisen:
- 1. Substanz: 0,5 %
- 2. Substanz: 30,0 %
- 3. Substanz: 30,0 %
- Organische Matrix, dotiert mit Diphenyloxazol (0,04 % des Gesamtgewichtes) : 39,5 %.

10. Treuhändischer Sicherheitsgegenstand nach einem der Patentansprüche 7 bis 9, wobei der Sicherheitsgegenstand einen Dotierstoff des Typs PP0 enthält (ungefähr 0,1 g/kg des Endproduktes); dieser Dotierstoff soll die Wirkung der anderen Substanzen erhöhen.

11. Treuhändischer Sicherheitsgegenstand nach einem der Patentansprüche 1 bis 10, wobei sich die genannte Matrix in Form eines dünnen Films mit einer Dicke von 5 bis 20 µm darbietet; dieser Film soll mindestens auf eine Seite des Sicherheitsgegenstandes aufgetragen werden.

12. Teuhändischer Sicherheitsgegenstand nach Patentanspruch 11, wobei der genannte Film mindestens auf eine Seite des Sicherheitsgegenstandes mittels Übertragung aufgebracht wird.

13. Treuhändischer Sicherheitsgegenstand nach einem der Patentansprüche 1 bis 10, wobei sich die genannte Matrix in Form eines Lackes oder einer Druckerfarbe darbietet.

14. Treuhändischer Sicherheitsgegenstand nach Patentanspruch 13, wobei der genannte Lack mindestens auf eine Seite des Sicherheitsgegenstandes mittels Druck- bzw. Beschichtungsverfahren aufgetragen wird.

15. Treuhändischer Sicherheitsgegenstand nach einem der Patentansprüche 1 bis 10, wobei sich die genannte Matrix in Form von Partikeln darbietet, die in den Sicherheitsgegenstand eingebaut werden sollen.

16. Treuhändischer Sicherheitsgegenstand nach Patentanspruch 15, wobei die genannten Partikel in das Papier eingebaut werden.

## Claims

1. Fiduciary or security object exhibiting optical characteristics which allow it to be identified and make it difficult to reproduce it, **characterised in that** it comprises on at least one of its portions an organic matrix into which are incorporated:
- one or more scintillating materials,
- one or more photoluminescent materials having long-term persistence,
these materials forming a light cascade so that they absorb solar radiation for reemitting a mixture of radiations at predetermined wavelengths, this mixture forming a first colour ; they absorb ultraviolet radiation for reemitting a mixture of radiations at predetermined wavelengths, this mixture forming a second colour ; and they emit after exposure to ultraviolet radiation a mixture of radiations at predetermined wavelengths, this mixture forming a third colour visible in the dark.

2. Object according to claim 1, **characterised in that** said materials are conjugated cyclic aromatic materials and/or photoluminescent crystals.

3. Object according to either of claims 1 to 2,
**characterised in that** said matrix is made of an organic resin such as a resin of the polyamide or polyethylene or acrylic or vinyl type.

4. Object according to any of claims 1 to 3, **characterised in that** said organic matrix is covered with a substance transparent in the spectral band from ultraviolet to infrared, with the exception of at least one band of given wavelength.

5. Object according to claim 4, **characterised in that** said substance is transparent in the spectral band from ultraviolet to infrared, with the exception of a band of wavelength including the wavelength of 255 nanometres.

6. Object according to claim 4, **characterised in that** said substance is transparent in the spectral band from ultraviolet to infrared, with the exception of a band of wavelength including the wavelength of 366 nanometres.

7. Object according to any of claims 1 to 3,
**characterised in that** said organic matrix comprises the following three materials:
- 1st material: fluorescent substance optionally coloured in natural light;
- 2nd substance: calcium and strontium sulphide crystals doped with bismuth (photoluminescent material with long-term persistence);
- 3rd material: zinc sulphide crystals doped with copper (photoluminescent material with long-term persistence).

8. Object according to any of claims 1 to 3, **characterised in that** said organic matrix comprises the following three materials:
- 1st material: fluorescent substance optionally coloured in natural light;
- 2nd substance: zinc and cadmium sulphide crystals doped with copper (photoluminescent material with long-term persistence);
- 3rd material: yttrium oxysulphide crystals doped with europium (photoluminescent material with long-term persistence).

9. Object according to either of claims 7 or 8, **characterised in that** the assembly consisting of the organic matrix and said materials has the following composition by weight:
- 1st material: 0.5%
- 2nd material: 30.0%
- 3rd material: 30.0%
- organic matrix doped with 0.04% by weight of diphenyloxazole: 39.5%.

10. Object according to any of claims 7 to 9, **characterised in that** it comprises a doping material of the PPO type, in a content of about 0.1 g/kg of the end product, for promoting operation of the other materials.

11. Object according to any of claims 1 to 10, **characterised in that** said matrix is in the form of a film with a thickness of the order of 5 or 20 *µ*m, for application to at least a portion of the object.

12. Object according to claim 11, **characterised in that** said film is applied to at least a portion of the object by transfer.

13. Object according to any of claims 1 to 10, **characterised in that** said matrix is in the form of a varnish or a printing ink.

14. Object according to claim 13, **characterised in that** said varnish is applied to at least a portion of the object by printing or by coating.

15. Object according to any of claims 1 to 10, **characterised in that** said matrix is in the form of particles for incorporation into the constituent material of the object.

16. Object according to claim 15, **characterised in that** said particles are incorporated into the paper.
